# EUROPÄISCHE PATENTSCHRIFT

(11) **EP 2 383 505 B1**
(45) Veröffentlichungstag und Bekanntmachung des Hinweises auf die Patenterteilung: **20.11.2019**
(21) Anmeldenummer: 11163937.3
(22) Anmeldetag: 27.04.2011
(51) Int. Cl.: F16L 59/12, F17C 13/08, F16B 5/06, F17C 3/02

(54) **Befestigungseinheit zum Befestigen eines Dämmelementes an einem Behälter**
Fixing unit for fixing an insulating element to a container
Unité de fixation pour la fixation d'un élément d'isolation sur un récipient

(30) Priorität: 27.04.2010 DE 102010016650
(43) Veröffentlichungstag der Anmeldung: 02.11.2011
(73) Patentinhaber: KAEFER Isoliertechnik GmbH & Co. KG, 28195 Bremen (DE)
(72) Erfinder: Boguhn, Alexander, 21029, Hamburg (DE); Holtz, Sebastian, 18119, Rostock (DE)
(74) Vertreter: Tappe, Udo

(56) Entgegenhaltungen:
- EP-A1- 1 338 526
- EP-A2- 0 590 317
- WO-A1-2008/007837
- DE-A1- 3 015 745
- DE-A1- 3 321 064
- DE-A1- 4 413 510
- DE-A1- 19 730 921
- DE-A1-102006 043 477
- US-A- 3 273 740
- US-A- 4 312 165

## Beschreibung

Die Erfindung betrifft eine Befestigungseinheit zum Befestigen eines Dämmelementes an einem Behälter für kryogene Stoffe, mit einem mit einer Behälterwand des Behälters fest verbundenem Halteelement, das zum Dämmelement mit mindestens einer zur Behälterwand rechtwinkligen Komponente verschiebbar ist. Ferner betrifft die Erfindung einen Behälter für kryogene Stoffe, insbesondere Lager- oder Transportbehälter für Flüssigerdgas, mit einer Behälterwand und mit daran angebrachten Dämmelementen.

Eine derartige Befestigungseinheit und ein solcher Behälter sind aus der DE 44 13 510 A1 bekannt, welche die Dämmung eines Tanks für tiefkalte (kryogene) Flüssigkeiten betrifft.

WO 2008/007837 A1 zeigt gemäß Fig. 1 und 6 ein Isolationssystem für einen LNG-Tank (liquefied natural gas) zur Lagerung und zum Transport von tiefgekühltem verflüssigtem Erdgas und gemäß Fig. 9-11 eine Befestigungseinheit.

US 3,273,740 betrifft einen Behälter zum Transport tiefsiedender Flüssiggase, bestehend aus einer Innenwandung und einem Außenmantel, die sich mittels mehrerer Führungseinrichtungen gegeneinander verschieben können, und einer zwischen der Innenwandung und dem Außenmantel gelegenen Sperrwand, auf deren der Innenwandung zugekehrten Seite eine pulverförmige Isolation und auf deren dem Außenmantel zugekehrten Seite eine feste tragende Isolation vorgesehen ist.

DE-10 2006 043 477-A1 zeigt ein System zum Verbinden der Isolierpaneele mit der Schiffsstruktur mit Hilfe von Profilen.

Gedämmte Tanks werden für die Lagerung und/oder den Transport von tiefgekühlten Flüssiggasen eingesetzt. Insbesondere Flüssigerdgas, sogenanntes LNG (liquefied natural gas), wird mittels gedämmter Tanks gelagert und/oder transportiert. Erdgas wird durch Abkühlung auf minus 164°C bis minus 161°C verflüssigt. Das hierdurch entstehende LNG weist etwa 1/600stel des Volumens von Erdgas in Gasform auf, wodurch Lagerungsvolumen und/oder Transportvolumen eingespart werden kann.

Behälter zur Lagerung und zum Transport von kryogenen Stoffen, insbesondere verflüssigten Gasen, benötigen an der innen und/oder außen liegenden Behälterwand eine hinreichende Isolierung bzw. Dämmung, um die Verdampfungsrate der tiefkalten Stoffe zu begrenzen. Hierbei muss die Isolierung sowohl beim ersten Abkühlen des Behälters als auch im Betrieb zuverlässig ihre Funktion erfüllen. In diesem Zusammenhang sind die Änderungen der Abmessungen sowohl des Behälters als auch der Isolierung aufgrund der thermischen Änderungen beim Befüllen oder Entladen des Behälters mit kryogenen Stoffen zu berücksichtigen. Weiter ist das Temperaturprofil von Bedeutung, das sich in der Dämmung bzw. dem Dämmelement einstellt.

Die Dämmung beispielsweise eines Tanks ist aus mehreren nebeneinander angeordneten Dämmelementen, so genannten Dämm- oder Isolierpaneelen, zusammengesetzt. Dies erleichtert die Herstellung einer Dämmung für einen großvolumigen prismatischen Tank. Die Dämmelemente bestehen beispielsweise aus geschäumten Polystyrol oder Polyurethan und können einschichtig oder mehrschichtig ausgebildet sein. Hierbei kann des Weiteren eine das Dämmelement außen abdeckende Dampfsperre aus einem geeigneten Material, beispielsweise einer Aluminiumfolie, vorgesehen sein. Die einzelnen Dämmelemente sind beispielsweise mittels Verkleben miteinander verbunden. Zudem ist jedes Dämmelement mittels mindestens eines Halteelementes mit der Außenfläche der Behälterwand des Tanks verbunden.

Im nicht befüllten Zustand weist der Tank und die Dämmung in Abhängigkeit von der Umgebungstemperatur eine maximale Ausdehnung auf. Beim ersten Abkühlen und Befüllen des Tanks mit kryogenen Stoffen zieht sich der Tank entsprechend seiner Material-, Dehn- und Schrumpfeigenschaften zusammen. Hierbei entstehen auf der Oberfläche der Behälterwand des Tanks Verwerfungen. Die den Tank umgebende Dämmung zieht sich aufgrund zum Tank abweichender Material-, Dehn- und Schrumpfeigenschaften unterschiedlich zusammen.

Das unterschiedliche Dehnungs- bzw. Schrumpfverhalten des, insbesondere metallenen, Behälters und der auf ihm zu befestigenden Isolierung, beispielsweise aus Kunststoffschaum, führt zu erheblichen Kräften, die vom Behälter über Halteelemente auf die Dämmung bzw. das Dämmelement übertragen werden müssen.

Bei der Befestigungseinheit nach der DE 44 13 510 A1 ist nachteilig, dass zur Befestigung des Dämmelementes, das Dämmelement mit einer Durchgangsbohrung versehen werden muss. Die hierbei in Kauf genommene Durchdringung der Dämmung führt zu einer Reduzierung der Isoliereigenschaften der Dämmung durch die Entstehung von Wärmebrücken. Soll die Befestigungseinheit innerhalb der Dämmung angeordnet sein, ist es notwendig, die Dämmung zweischichtig auszubilden. Anschließend kann die Durchgangsbohrung vergossen werden. Insgesamt ergibt sich eine aufwendige Herstellung und Montage der Befestigungseinheit, mit entsprechend hohen Kosten, insbesondere für die Montage.

Die Erfindung betrifft eine Befestigungseinheit mit einem Halteelement, das mindestens teilweise innerhalb eines Sackloches geführt ist, wobei das Sackloch in das Dämmelement eingearbeitet und auf einer der Behälterwand zugewandten Seite des Dämmelementes angeordnet ist. Bei dem erfindungsgemäßen Behälter sind die Dämmelemente mit einer solchen Befestigungseinheit an der Behälterwand angebracht

Somit wird in das Dämmelement auf der der Behälterwand zugewandten Seite lediglich ein Sackloch eingearbeitet. Eine völlige Durchdringung der Dämmung und die Entstehung einer Wärmebrücke aufgrund einer Durchgangsbohrung wird hierdurch vermieden. Zudem entfällt der Arbeitsgang der Verfüllung bzw. des Vergießens des Bohrloches nach der Montage. Bereits hierdurch wird ein erheblicher Anteil des Montageaufwandes eingespart. Die damit verbundenen Kosten werden entsprechend reduziert. Zudem ergibt sich ein hoher Vorfertigungsgrad. So ist es möglich, Teile der Befestigungseinheit oder die gesamte Befestigungseinheit bei der Herstellung der Dämmung, insbesondere des Dämmelementes, in der Dämmung vorzumontieren. Hierdurch wird der Montageaufwand beim Anbringen des Dämmelementes an der Behälterwand erheblich reduziert.

Bei der Kombination eines einfach herzustellenden Sackloches mit dem Halteelement ist von Vorteil, dass die Befestigungseinheit möglichst wenig in das Dämmelement eindringt. Hierdurch ist es möglich, die wirkenden Kräfte so dicht wie möglich an der Oberfläche der Behälterwand einzuleiten. Aufgrund der geringen Einbautiefe der Befestigungseinheit in das Dämmelement stellt sich in der Befestigungseinheit mindestens annähernd die gleiche Temperatur wie auf der dem Dämmelement zugewandten Oberfläche der Behälterwand ein. Hierdurch nehmen die zu übertragenden Kräfte in Form von beispielsweise Schub-, Druck- und/oder Zugkräften ein Minimum ein.

Die Erfindung betrifft auch eine formschlüssige Sicherung, nämlich eine Schnappverbindung, gegen Lösen des Halteelementes aus dem Sackloch. Eine derartige Sicherung lässt sich einfach und kostengünstig herstellen. Zudem erlaubt die Ausgestaltung als Schnappverbindung eine einfache und schnelle Montage, wodurch Zeit und Kosten gespart werden.

Gemäß einer weiteren Ausführungsform ist einer der Behälterwand zugewandten Öffnung des Sackloches mindestens ein radial nach innen ausgerichteter Kragen zugeordnet. Das Halteelement kann mittels einer formschlüssigen Schnappverbindung den Kragen hintergreifen. Hierdurch lässt sich eine formschlüssige Sicherung, insbesondere eine Schnappverbindung, besonders einfach und kostengünstig realisieren. Der Kragen ist als ein formschlüssiger Anschlag ausgebildet. Hierbei kann ein erster Abschnitt des Haltelementes innerhalb des Sackloches zumindest teilweise einen größeren Durchmesser als die Öffnung des Sachloches aufweisen. Hierbei ist der erste Abschnitt des Halteelementes von der Behälterwand abgewandt. Ein zweiter der Behälterwand zugewandter Abschnitt des Halteelementes weist einen derartigen Durchmesser auf, dass der zweite Abschnitt durch die durch den Kragen gebildete Kragenöffnung in Richtung der Behälterwand hindurch treten kann. Hierdurch wird ein vollständiges sich Herausschieben des Halteelementes aus dem Sackloch vermieden.

Auf das Dämmelement und das Sackloch umgebend kann ein, insbesondere ringförmiges, Plattenelement mit einer zentrischen Bohrung aufgesetzt sein. Zum Ausbilden des Kragens kann die Bohrung einen Bohrungsdurchmesser kleiner als der Durchmesser der Öffnung des Sackloches aufweisen. Das Plattenelement kann beispielsweise als eine ringförmige Scheibe ausgebildet sein und/oder eine Dicke von 1 mm bis 20 mm, insbesondere von 2 mm bis 12 mm, aufweisen. Mittels eines geeigneten Klebers, insbesondere eines 2-Komponenten-Klebers, kann das Plattenelement auf das Dämmelement aufgeklebt sein. Vorzugsweise weist das Plattenelement den gleichen oder zumindest einen ähnlichen Wärmeausdehnungskoeffizienten wie das Material des Dämmelementes auf. Hierbei dient der Wärmeausdehnungskoeffizient als ein Kennwert für das Dehnungs- und/oder Schrumpfverhalten des jeweils betrachteten Materials bei einer Temperaturveränderung. Kräfte, insbesondere Schubkräfte, sind mittels des Plattenelementes auf das Dämmelement übertragbar. Hierbei erfolgt die Übertragung der Kräfte derart, dass eine Beschädigung des Dämmelementes weitgehend vermieden wird.

Entsprechend einer Weiterbildung der Erfindung ist innerhalb des Sackloches eine Hülse zur Aufnahme des Halteelementes angeordnet. Die Hülse kann an der der Behälterwand zugewandten Seite einen radial nach innen gerichteten Kragen aufweisen. Die Hülse besteht beispielsweise aus Metall oder Kunststoff. Mittels der Hülse lässt sich das Sackloch zusätzlich versteifen. Zudem wird das Dämmelement vor möglichen Beschädigungen aufgrund des innerhalb des Sackloches beweglichen Halteelementes geschützt. Des Weiteren bildet eine Hülse mit einem radial nach innen gerichteten Kragen eine einfache Möglichkeit, der Öffnung des Sackloches den Kragen zum Hintergreifen für das Halteelement zuzuordnen. Insbesondere ist die Hülse in das Sackloch mittels eines geeigneten Klebers eingeklebt.

Vorzugsweise ist das Halteelement von dem Kragen, insbesondere reibungsfrei zum Sackloch bzw. zur Hülse, geführt. Somit dient der Kragen für die Verschiebebewegung des Halteelementes als Führung für das Halteelement, insbesondere für den zweiten Abschnitt des Halteelementes. Innerhalb des Sackloches bzw. der Hülse ist zwischen Halteelement und Sackloch bzw. Hülse ein Spalt ausgebildet. Hierdurch wird die Entstehung von Reibung und/oder von Schäden an dem Dämmelement, dem Sackloch und/oder der Hülse vermieden.

Nach einer weiteren Ausführungsform ist das Halteelement mittels einer Feder oder eines Elastomers in Richtung auf die Behälterwand vorgespannt. Hierdurch wird die Montage des Halteelementes mit der Behälterwand unterstützt. Insbesondere beim Kleben des Halteelementes auf die Behälterwand, ist hierdurch in der Phase des Aushärtens des Klebers ein hinreichender Anpressdruck gewährleistet.

Gemäß einer Weiterbildung der Erfindung ist ein Führungselement mit einem Führungsstift zwischen dem Sacklochgrund des Sackloches und dem Halteelement angeordnet. Vorzugsweise ist der Führungsstift im Bereich der Mittelachse des Sackloches angeordnet. Mittels des Führungsstiftes wird die Führung des verschiebbaren Halteelementes verbessert. Bei der Verwendung einer Hülse im Sackloch mit einem dem Sacklochgrund zugewandten Hülsenboden, kann das Führungselement zwischen dem Hülsenboden und dem Halteelement angeordnet sein. Insbesondere ist das Führungselement mit dem Sackloch bzw. der Hülse, vorzugsweise mit dem Sacklochgrund bzw. dem Hülsenboden, verklebt. Hierdurch ist sowohl bei der Montage als auch im Betrieb eine korrekte Positionierung des Führungselementes gewährleistet. Vorzugsweise ist der Führungsstift mindestens teilweise innerhalb einer dem Sacklochgrund bzw. dem Hülsenboden zugewandten Sackbohrung des Halteelementes geführt. Hierdurch ist gewährleistet, dass der Führungsstift, insbesondere im Betriebszustand, nicht vollständig aus der Sackbohrung heraus geführt werden kann, wodurch ein dauerhaft zuverlässiger Betrieb begünstigt wird. Alternativ kann der Hülsenboden den Führungsstift aufweisen. Die Hülse kann somit den Kragen und das Führungselement mit dem Führungsstift in einem einzigen Bauteil vereinen, wodurch die Montage erleichtert wird. Insbesondere ist innerhalb der Sackbohrung die Feder oder das Elastomer angeordnet. Hierdurch ist die Lage der Feder oder des Elastomers festgelegt und eine zuverlässige Funktionsweise gegeben. Die Feder kann als eine Spiralfeder ausgebildet sein.

Vorzugsweise ist ein in Richtung der Behälterwand vorgespanntes Halteelement in einem Montagezustand mittels eines der Öffnung des Sackloches zugeordneten lösbaren Sperrmittels, insbesondere einer Folie, in einem in das Dämmelement eingefahrenen Zustand gehalten. Hierdurch lässt sich die gesamte Befestigungseinheit in dem Dämmelement, vormontieren. Bei der Montage wird das Sperrmittel, insbesondere per Hand, entfernt. Das beispielsweise mittels der Feder oder des Elastomers vorgespannte Halteelement wird aus dem Sackloch mindestens teilweise heraus gedrückt. Diese Verschiebebewegung wird vorzugsweise von dem Kragen begrenzt. Das heraus geschobene Halteelement wird durch die Feder oder das Elastomer auf die Behälterwand gedrückt, wodurch das Herstellen einer festen Verbindung vereinfacht ist. Vorzugsweise erfolgt die Verbindung zwischen dem Halteelement und der Behälterwand mittels einer kraftschlüssigen Verbindung, insbesondere einer Klebeschicht, die beispielsweise beim Entfernen des Sperrmittels frei gelegt wird. Alternative oder zusätzlich ist die Herstellung einer Schweißverbindung zwischen Halteelement und Behälterwand möglich.

Entsprechend einer weiteren Ausführungsform ist eine Dämmung aus mehreren nebeneinander angeordneten Dämmelementen zusammengesetzt. Dies erleichtert die Herstellung einer Dämmung für einen großvolumigen Behälter. Der Behälter kann als ein Tank für kryogene Stoffe, insbesondere tiefgekühlte Flüssiggase, ausgebildet sein. Vorzugsweise ist je Dämmelement genau eine Befestigungseinheit im thermischen Zentrum des Dämmelementes positioniert. Hierbei ist das thermische Zentrum der Ort des Dämmelementes, der auf der der Behälterwand zugewandten Seite des Dämmelementes liegt und an dem Verschiebungen durch thermisches Dehnen und/oder Schrumpfen gegen Null gehen. Dieser Ort, nämlich das thermische Zentrum, kann für eine vorgegebene Geometrie eines Dämmelementes, insbesondere durch FEM-Berechnungen (FEM: Finite-Elemente-Methode), ermittelt werden. Lediglich in Ausnahmefällen stimmt das thermische Zentrum mit dem geometrischen Zentrum überein.

Nachfolgend werden Ausführungsbeispiele der Erfindung anhand der Zeichnungen näher erläutert. In diesen zeigen:

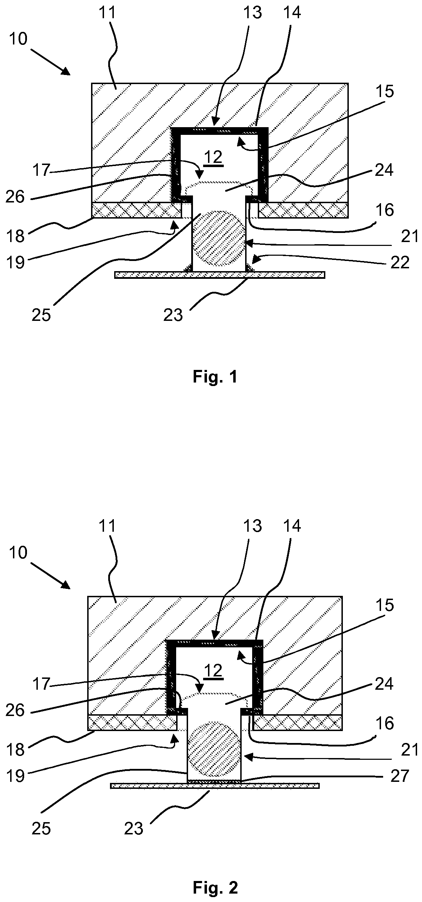

- Fig. 1: eine erste Befestigungseinheit mit den Erfindungsmerkmalen in einer Schnittdarstellung,
- Fig. 2: die Befestigungseinheit gemäß Fig. 1 mit einem verklebten ersten Halteelement,

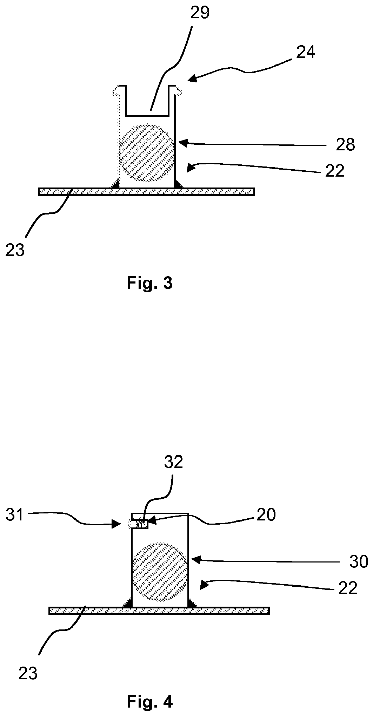

- Fig. 3: ein zweites Halteelement in einer Schnittdarstellung,
- Fig. 4: ein drittes Halteelement in einer Schnittdarstellung,

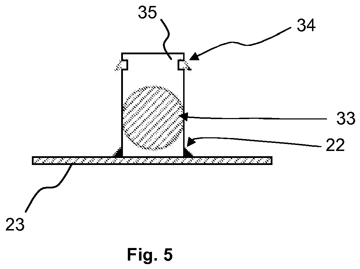

- Fig. 5: ein viertes Halteelement in einer Schnittdarstellung,

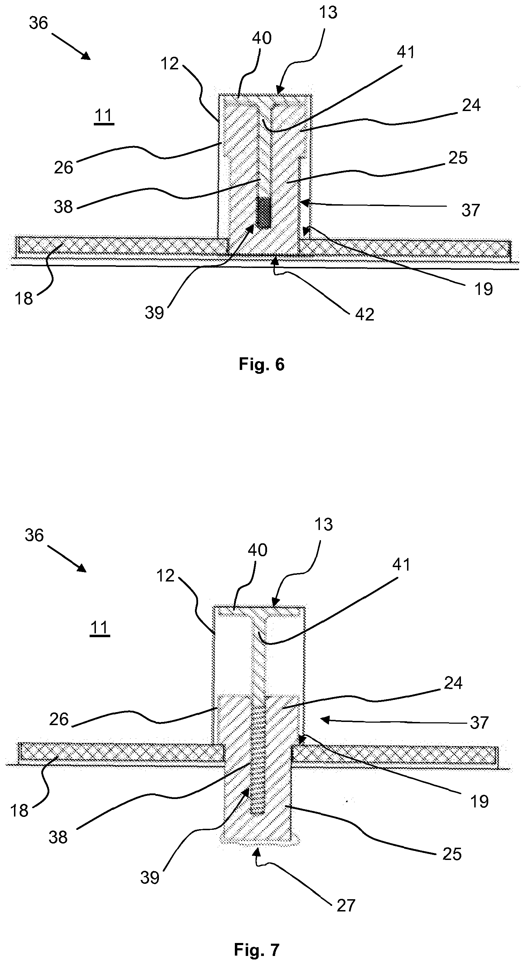

- Fig. 6: ein nicht zur Erfindung gehöriges Beispiel einer weiteren Befestigungseinheit mit einem weiteren Halteelement in einem Vorfertigungszustand in einer Schnittdarstellung, und
- Fig. 7: die Befestigungseinheit gemäß Fig. 6 in einem Montagezustand.

Fig. 1 zeigt eine erste Befestigungseinheit 10 mit den Erfindungsmerkmalen in einer Schnittdarstellung. Hierbei ist in einem Dämmelement 11 ein Sackloch 12 eingebracht. Das Sackloch 12 weist einen Sacklochgrund 13 auf. In das Sackloch 12 ist eine Hülse 14 eingebracht. In dem hier gezeigten Ausführungsbeispiel ist die Hülse 14 in das Sackloch 12 mittels eines geeigneten Klebers eingeklebt. Hierbei kommt ein Hülsenboden 15 auf dem Sacklochgrund 13 zu liegen.

Weiter weist die Hülse 14 auf der dem Sacklochgrund 13 bzw. dem Hülsenboden 15 abgewandt liegenden Seite einen radial, nach innen ausgerichteten ringförmigen Kragen 16 auf. Der Kragen 16 der Hülse 14 schließt bündig mit einer Öffnung 17 des Sackloches 12 ab. Des Weiteren ist auf dem Dämmelement 11 und das Sackloch 12 umgebend ein Plattenelement 18 mit einer zum Sackloch 12 zentrischen Bohrung aufgesetzt. In dem hier gezeigten Ausführungsbeispiel ist das Plattenelement 18 als eine ringförmige Scheibe ausgebildet. Weiter ist das Plattenelement 18 mittels eines geeigneten Klebers, insbesondere eines 2-Komponenten-Klebers, auf das Dämmelement 11 aufgeklebt.

Die Bohrung des Plattenelementes 18 weist einen geringeren Durchmesser als das Sackloch 12 auf. Hierdurch entsteht ein Kragen 19, der hinsichtlich des Sackloches 12 radial nach innen ausgerichtet ist. Hierdurch wird die Hülse 14 zusätzlich in ihrer Position in dem Sackloch 12 fixiert. Zudem können Kräfte von der Hülse 14 auf das Plattenelement 18 abgeleitet werden und von dem Plattenelement 18 großflächig in das Dämmelement 11 eingeleitet werden. Hierdurch wird eine Beschädigung des Dämmelementes 11 aufgrund punktuell hoher eingeleiteter Kräfte vermieden.

In dem Sackloch 12 bzw. der Hülse 14 ist zumindest teilweise ein erstes Halteelement 21 angeordnet. Das Halteelement 21 ist in dem hier gezeigten Ausführungsbeispiel als ein Bolzen mit einem kreiszylinderförmigen Querschnitt ausgebildet. Alternativ ist jedoch auch jeder andere Querschnitt denkbar. Weiter ist das Halteelement 21 auf der dem Sackloch 12 abgewandten Seite stoffschlüssig fest mit einer Behälterwand 23 verbunden. Der stoffschlüssige Verbund ist in dem hier gezeigten Ausführungsbeispiel mittels Verschweißen und einer Schweißnaht 22 realisiert. Hierbei stellt die dargestellte Behälterwand 23 einen Ausschnitt aus einer Behälterwand 23 für einen Behälter, insbesondere für einen Tank für kryogene Stoffe, dar. Der Tank kann beispielsweise eine prismatische Form aufweisen. Vorzugsweise ist der Tank als Kugeltank ausgebildet. Das Halteelement 21 weist einen ersten Abschnitt 24 und einen zweiten Abschnitt 25 auf. Hierbei ist die Höhe des ersten Abschnittes 24 geringer als die Höhe des zweiten Abschnittes 25. Zudem ist der Durchmesser des ersten Abschnitts 24 größer als der Durchmesser des zweiten Abschnitts 25. Somit ist der erste Abschnitt 24 als eine Kopfplatte ausgebildet. Hierbei ist der Durchmesser des zweiten Abschnitts 25 derart gewählt, dass der zweite Abschnitt 25 des Halteelementes 21 durch den Kragen 16 der Hülse 14 geführt ist. Entsprechend hintergreift der erste Abschnitt 14 den Kragen 16. Weiter ist der Durchmesser des ersten Abschnitts 24 kleiner als ein Innendurchmesser der Hülse 14 gewählt. Hierdurch entsteht zwischen der Innenwand der Hülse 14 und dem ersten Abschnitt 24 des Halteelementes 21 ein Ringspalt 26.

Begrenzt durch die Tiefe des Sackloches 12 bzw. der Hülse 14 ist das Halteelement 21 rechtwinklig zur Behälterwand 23 verschiebbar in dem Sackloch 12 bzw. der Hülse 14 geführt.

Fig. 2 zeigt die Befestigungseinheit 10 gemäß Fig. 1, bei dem das erste Halteelement 21 mit der Behälterwand 23 kraftschlüssig fest verbunden ist. In dem hier gezeigten Ausführungsbeispiel ist die kraftschlüssige Verbindung mittels einer Klebeschicht 27 realisiert. Das Halteelement 21 lässt sich gemäß Fig. 1 und 2 zum Herstellen der formschlüssigen Schnappverbindung bei der Montage durch einfaches Aufdrücken des Dämmelements 11 auf das Haltelement 21 in das Sackloch 12 bzw. die Hülse 14 einrasten.

Im Folgenden tragen gleiche Bauteile die gleichen Bezugszeichen. Die jeweils vorangegangene Beschreibung ist entsprechend zu berücksichtigen.

Fig. 3 zeigt ein zweites Halteelement 28 in einer Schnittdarstellung, das mit einer Schweißnaht 22 an der Behälterwand 23 verschweißt ist. Das zweite Halteelement 18 stimmt in Aufbau und Funktionsweise grundsätzlich mit dem ersten Halteelement 21 gemäß Fig. 1 und 2 überein. Insoweit wird auf die vorangegangene Beschreibung verwiesen. Im Gegensatz zum Halteelement 21 nach Fig. 1 und 2 weist das Halteelement 28 auf der von der Behälterwand 23 abgewandten Kopfseite eine Nut 29 auf. Die Nut 29 kann beispielsweise mittels Fräsen hergestellt werden. Hierdurch ergibt sich im ersten Abschnitt 24 des Halteelementes 28 eine größere Elastizität und das Einrasten des Halteelementes 28 bei der Montage mit dem Dämmelement 11 beispielsweise gemäß Fig. 1 wird erleichtert.

Fig. 4 zeigt ein drittes Halteelement 30 in einer Schnittdarstellung, wobei das Halteelement 30 mit der Behälterwand 23 durch eine Schweißnaht 22 verbunden ist. Das Halteelement 30 ist als ein kreiszylindrischer Bolzen mit einem durchgehend gleichbleibenden Durchmesser ausgebildet. Alternativ sind auch andere Querschnittsformen denkbar. Von der Behälterwand 23 abgewandt und am Außenumfang des Kreiszylinders des Halteelementes 30 ist eine radial nach außen federbelastete Kugel 31 angeordnet. Bei der Montage wird die Kugel 31 beim Durchgang durch den Kragen 16 bzw. 19 in eine Einsenkung 32 radial nach innen entgegen einer in der Einsenkung 32 angeordneten Feder 20 eingedrückt. Sobald der Kragen 19 bzw. 16 passiert ist, wird die Kugel 31 mittels der Feder 20 wieder aus der Einsenkung 32 teilweise heraus gedrückt und hintergreift somit den Kragen 16 bzw. 19. Fig. 5 zeigt ein viertes Halteelement 33 in einer Schnittdarstellung. Auch hier ist das Halteelement 33 mittels einer Schweißnaht 22 mit der Behälterwand 23 verschweißt. Das Halteelement 33 ist ebenfalls als ein kreiszylindrischer Bolzen mit einem gleichbleibenden Durchmesser über seine gesamte Länge ausgebildet. An dem von der Behälterwand 23 abgewandten Ende des Halteelementes 33 ist ein den zylindrischen Umfang des Halteelementes 33 umlaufendes Rastelement 34 vorgesehen. Hierbei ist das Rastelement 34 in einer umlaufend angeordneten Nut 35 positioniert. Bei der Montage wird das Rastelement 34 beim Durchgang durch den Kragen 16 bzw. 19 in die Nut 35 radial nach innen eingedrückt. Sobald der Kragen 19 bzw. 16 passiert ist, tritt das Rastelement 34 wieder aus der Nut 35 aus und hintergreift somit den Kragen 16 bzw. 19.

Alternativ zur stoffschlüssigen Verbindung, insbesondere mittels Verschweißen, der Halteelemente 28, 30, 33 mit der Behälterwand 23 ist es auch möglich, die Halteelemente 28, 30, 33 mittels einer kraftschlüssigen Verbindung, insbesondere mittels einer Klebeschicht 27 analog zu Fig. 2, mit der Behälterwand 23 fest zu verbinden.

Fig. 6 zeigt eine weitere Befestigungseinheit 36 mit einem weiteren Halteelement 37 in einem Vorfertigungszustand in einer Schnittdarstellung. Der Vorfertigungszustand des Halteelementes 37 bzw. der Befestigungseinheit 36 kann bereits bei der Fertigung des Dämmelementes 11 hergestellt werden und in das Dämmelement 11 vormontiert werden. In ein hier nicht näher dargestelltes Dämmelement 11 ist ein Sackloch 12 mit einem Sacklochgrund 13 eingebracht. Die Öffnung 17 des Sackloches 12 wird von einem radial nach innen gerichteten Kragen 19 eines Plattenelementes 18 teilweise überdeckt. Innerhalb des Sackloches 12 ist das weitere Halteelement 37 angeordnet. Dieses Halteelement 37 weist in der hier dargestellten Ausführungsform einen kreiszylindrischen Querschnitt mit einem ersten Abschnitt 24 und einem zweiten Abschnitt 25 auf. Alternativ sind auch andere Querschnittsformen denkbar. Der dem Sacklochgrund 13 zugewandte erste Abschnitt 24 weist einen größeren Durchmesser als der vom Sacklochgrund 13 abgewandte zweite Abschnitt 25 auf. Weiter entspricht der Durchmesser des zweiten Abschnittes 25 im Wesentlichen dem Durchmesser der zentrischen Bohrung des Plattenelementes 18. Somit wird das Halteelement 37, insbesondere der zweite Abschnitt 25, durch den Kragen 19 geführt. Darüber hinaus ist der Durchmesser des ersten Abschnittes 24 geringer als der Innendurchmesser des Sackloches 12. Hierdurch ist zwischen der Innenwandung des Sackloches 12 und dem Halteelement 37 ein Ringspalt 26 gegeben.

Das Halteelement 37 weist auf der dem Sacklochgrund 13 zugewandten Seite im Bereich seiner Längsachse eine Sackbohrung 38 auf. In dem Grund der Sackbohrung 38 ist eine Feder 39 angeordnet. Des Weiteren ist in dem Sackloch 12 zwischen dem Sacklochgrund 13 und dem Halteelement 37 ein Führungselement 40 mit einem Führungsstift 41 positioniert. In dem hier dargestellten Vorfertigungszustand ist der Führungsstift 41 vollständig in der Sackbohrung 38 des Halteelementes 37 aufgenommen. Durch den Führungsstift 41 wird die Feder 39, welche hier als Spiralfeder ausgebildet ist, zusammengedrückt. Das Halteelement 37 schließt mit der von dem Sackloch 12 abgewandten Seite des Plattenelementes 18 bündig ab. Als Widerlager für das vorgespannte Halteelement 37 dient ein Sperrmittel 42, welches in der hier dargestellten Ausführungsform als eine Folie ausgebildet ist, die auf die zentrale Bohrung des Plattenelementes 18 aufgeklebt ist. Alternativ sind jedoch auch andere Gestaltungen des Sperrmittels 42, beispielsweise als Stiftsicherung, denkbar.

Fig. 7 zeigt die Befestigungseinheit 36 gemäß Fig. 6 in einem Montagezustand. Zum Übergang vom Vorfertigungszustand gemäß Fig. 6 in den Montagezustand gemäß Fig. 7 wird das Sperrmittel 42 entfernt. Aufgrund der Vorspannung durch die Feder 39 schiebt sich sodann das Halteelement 37 so weit aus dem Sackloch 12 heraus, bis die zum Sacklochgrund 13 abgewandte Seite des Halteelementes 37 auf eine hier nicht näher dargestellten Behälterwand eines Behälters stößt. Dabei wird das Halteelement 37 in der hier dargestellten Ausführungsform mittels einer Klebeschicht 27, insbesondere aus einem 2-Komponenten-Kleber, an der Behälterwand befestigt. Der maximale Austrittsweg des Halteelementes 37 aus dem Sackloch 12 wird in dem Moment begrenzt, in dem der erste Abschnitt 24 des Halteelementes 37 auf dem Kragen 19 zu liegen kommt.

Bei der Befestigungseinheit 10, 36 ist ein hoher Grad der Vorfertigung, insbesondere bereits bei der Herstellung des Dämmelementes 11, realisierbar. Der Montageaufwand bei der Befestigung des Dämmelementes 11 mit der Befestigungseinheit 10, 36 an einem Behälter ist gegenüber bekannten Befestigungseinheiten deutlich reduziert. Insbesondere bei der Herstellung einer Dämmung aus einzelnen Dämmelementen 11 zur Isolierung eines Tanks für tiefkalte Flüssiggase ergibt sich ein hoher Vorfertigungsgrad in Verbindung mit einem niedrigen Montageaufwand.

### Bezugszeichenliste:

- 10: Befestigungseinheit
- 11: Dämmelement
- 12: Sackloch
- 13: Sacklochgrund
- 14: Hülse
- 15: Hülsenboden
- 16: Kragen
- 17: Öffnung
- 18: Plattenelement
- 19: Kragen
- 20: Feder
- 21: Halteelement
- 22: Schweißnaht
- 23: Behälterwand
- 24: erster Abschnitt des Halteelementes
- 25: zweiter Abschnitt des Halteelementes
- 26: Ringspalt
- 27: Klebeschicht
- 28: Halteelement
- 29: Nut
- 30: Halteelement
- 31: Kugel
- 32: Einsenkung
- 33: Halteelement
- 34: Rastelement
- 35: Nut
- 36: Befestigungseinheit
- 37: Halteelement
- 38: Sackbohrung
- 39: Feder
- 40: Führungselement
- 41: Führungsstift
- 42: Sperrmittel

## Patentansprüche

1. Befestigungseinheit zum Befestigen eines Dämmelementes (11) an einem Behälter für kryogene Stoffe, mit einem mit einer Behälterwand (23) des Behälters fest verbindbaren Halteelement (21, 28, 30, 33, 37), das zum Dämmelement (11) mit mindestens einer zur Behälterwand (23) rechtwinkligen Komponente verschiebbar ist, wobei das Halteelement (21, 28, 30, 33, 37) mindestens teilweise innerhalb eines Sackloches (12) geführt werden kann, wobei das Sackloch (12) in das Dämmelement (11) eingearbeitet und auf einer der Behälterwand (23) zugewandten Seite des Dämmelementes (11) angeordnet ist, **dadurch gekennzeichnet, dass** eine Schnappverbindung gegen Lösen des Halteelementes (21, 28, 30, 33, 37) aus dem Sackloch (12) vorgesehen ist.

2. Befestigungseinheit nach Anspruch 1, **dadurch gekennzeichnet, dass** einer der Behälterwand (23) zugewandten Öffnung (17) des Sackloches (12) mindestens ein radial nach innen ausgerichteter Kragen (16, 19) zugeordnet ist, und vorzugsweise das Halteelement (21, 28, 30, 33, 37) mittels einer formschlüssigen Schnappverbindung den Kragen (16, 19) hintergreifen kann.

3. Befestigungseinheit nach einem der vorhergehenden Ansprüche, **dadurch gekennzeichnet, dass** auf das Dämmelement (11) und das Sackloch (12) umgebend ein, insbesondere ringförmiges, Plattenelement (18) mit einer zentrischen Bohrung aufgesetzt ist, wobei zum Ausbilden eines Kragens (19) die Bohrung vorzugsweise einen Bohrungsdurchmesser kleiner als der Durchmesser der Öffnung (17) des Sackloches (12) aufweist.

4. Befestigungseinheit nach Anspruch 3, **dadurch gekennzeichnet, dass** das Plattenelement (18) den gleichen Wärmeausdehnungskoeffizienten wie das Material des Dämmelementes (11) aufweist.

5. Befestigungseinheit nach einem der vorhergehenden Ansprüche, **dadurch gekennzeichnet, dass** innerhalb des Sackloches (12) eine Hülse (14) zur Aufnahme des Halteelementes (21, 28, 30, 33, 37) angeordnet ist, und vorzugsweise die Hülse (14) an der der Behälterwand (23) zugewandten Seite einen radial nach innen gerichteten Kragen (16, 19) aufweist.

6. Befestigungseinheit nach einem der Ansprüche 2 bis 5, **dadurch gekennzeichnet, dass** das Halteelement (21, 28, 30, 33, 37) von dem Kragen (16, 19), insbesondere reibungsfrei zum Sackloch (12) bzw. zur Hülse (14), geführt werden kann.

7. Befestigungseinheit nach einem der vorhergehenden Ansprüche, **dadurch gekennzeichnet, dass** das Halteelement (21, 28, 30, 33, 37) mittels einer Feder (39) oder eines Elastomers in Richtung auf die Behälterwand (23) vorgespannt werden kann.

8. Befestigungseinheit nach einem der vorhergehenden Ansprüche, **dadurch gekennzeichnet, dass** ein Führungselement (40) mit einem Führungsstift (41) zwischen dem Sacklochgrund (13) des Sackloches (12) und dem Halteelement (37) angeordnet werden kann, vorzugsweise der Führungsstift (41) mindestens teilweise innerhalb einer dem Sacklochgrund (13) zugewandten Sackbohrung (38) des Halteelementes (37) geführt werden kann, und insbesondere innerhalb der Sackbohrung (38) die Feder (39) oder das Elastomer angeordnet werden kann.

9. Befestigungseinheit nach einem der vorhergehenden Ansprüche, **dadurch gekennzeichnet, dass** ein in Richtung der Behälterwand (23) vorgespanntes Halteelement (21, 28, 30, 33, 37) in einem Montagezustand mittels eines der Öffnung (17) des Sackloches (12) zugeordneten lösbaren Sperrmittels (42), insbesondere einer Folie, in einem in das Dämmelement (11) eingefahrenen Zustand gehalten werden kann.

10. Befestigungseinheit nach einem der vorhergehenden Ansprüche, **dadurch gekennzeichnet, dass** eine Dämmung aus mehreren nebeneinander angeordneten Dämmelementen (11) zusammengesetzt ist, und dass vorzugsweise je Dämmelement (11) genau eine Befestigungseinheit (10, 36) im thermischen Zentrum des Dämmelementes (11) positioniert werden kann.

11. Behälter für kryogene Stoffe, insbesondere Lager- oder Transportbehälter für Flüssigerdgas, mit einer Behälterwand (23) und mit daran angebrachten Dämmelementen (11), **dadurch gekennzeichnet, dass** die Dämmelemente (11) mit einer Befestigungseinheit (10) nach einem der Ansprüche 1 bis 10 an der Behälterwand (23) angebracht sind.

## Claims

1. A fixing unit for fixing an insulating element (11) to a container for cryogenic substances, with a holding element (21, 28, 30, 33, 37) which is firmly connectable to a container wall (23) of the container and which is displaceable to the insulating element (11) with at least one component at right angles to the container wall (23), wherein the holding element (21, 28, 30, 33, 37) can be guided at least partially within a blind hole (12), wherein the blind hole (12) is incorporated into the insulating element (11) and arranged on a side of the insulating element (11), facing the container wall (23),
**characterized in that** a snap-fit connection is provided against loosening of the holding element (21, 28, 30, 33, 37) from the blind hole (12).

2. The fixing unit according to claim 1, **characterized in that** at least one radially inwardly aligned collar (16, 19) is assigned to an opening (17) of the blind hole (12), facing the container wall (23), and preferably the holding element (21, 28, 30, 33, 37) can engage behind the collar (16, 19) by means of a positive locking snap-fit connection.

3. The fixing unit according to any one of the preceding claims, **characterized in that** a, in particular annular, plate element (18) with a centric bore is attached to the insulating element (11) and the blind hole (12) in a surrounding manner, wherein the bore preferably has a bore diameter, which is smaller than the diameter of the opening (17) of the blind hole (12), for forming a collar (19).

4. The fixing unit according to claim 3, **characterized in that** the plate element (18) has the same thermal expansion coefficient as the material of the insulating element (11).

5. The fixing unit according to any one of the preceding claims, **characterized in that** a sleeve (14) is arranged within the blind hole (12) for receiving the holding element (21, 28, 30, 33, 37), and preferably the sleeve (14) has a radially inwardly aligned collar (16, 19) on the side facing the container wall (23).

6. The fixing unit according to any one of claims 2 to 5, **characterized in that** the holding element (21, 28, 30, 33, 37) can be guided from the collar (16, 19), in particular without any friction, to the blind hole (12) and to the sleeve (14), respectively.

7. The fixing unit according to any one of the preceding claims, **characterized in that** the holding element (21, 28, 30, 33, 37) can be biased towards the container wall (23) by means of a spring (39) or an elastomer.

8. The fixing unit according to any one of the preceding claims, **characterized in that** a guiding element (40) with a guiding pin (41) can be arranged between the blind hole bottom (13) of the blind hole (12) and the holding element (37), preferably the guiding pin (41) is guidable at least partially within a blind bore (38) of the holding element (37), facing the blind hole bottom (13), and the spring (39) or the elastomer can be arranged, in particular, within the blind bore (38).

9. The fixing unit according to any one of the preceding claims, **characterized in that** a holding element (21, 28, 30, 33, 37), which is biased in the direction of the container wall (23), can be held in a mounting state by means of a releasable locking means (42), which is assigned to the opening (17) of the blind hole (12), in particular a film, in a state, which is retracted into the insulating element (11).

10. The fixing unit according to any one of the preceding claims, **characterized in that** an insulation consists of several insulating elements (11) which are arranged side by side, and that preferably per each insulating element (11) exactly one fixing unit (10, 36) can be positioned in the thermal centre of the insulating element (11).

11. A container for cryogenic substances, in particular storage or transport container for liquefied natural gas, with a container wall (23) and with insulating elements (11) arranged thereon, **characterized in that** the insulating elements (11) with a fixing unit (10) according to any one of claims 1 to 10 are arranged on the container wall (23).

## Revendications

1. Unité de fixation pour fixer un élément isolant (11) à un récipient pour substances cryogéniques, avec un élément de maintien (21, 28, 30, 33, 37) pouvant être relié solidement à une paroi de récipient (23) du récipient qui peut se déplacer vers l'élément isolant (11) avec au moins un composant à angle droit par rapport à la paroi de récipient (23), l'élément de maintien (21, 28, 30, 33, 37) pouvant être guidé au moins partiellement dans un trou borgne (12), le trou borgne (12) étant incorporé dans l'élément isolant (11) et placé sur un côté de l'élément isolant (11) opposé la paroi de récipient (23), **caractérisée en ce qu'**une liaison par encliquetage est pourvue pour empêcher le dévissage de l'élément de maintien (21, 28, 30, 33, 37) du trou borgne (12).

2. Unité de fixation selon la revendication 1, **caractérisée en ce qu'**au moins une collerette (16, 19) alignée radialement vers l'intérieur est associée à une ouverture (17) du trou borgne (12) faisant face à la paroi de récipient (23), et de préférence l'élément de maintien (21, 28, 30, 33, 37) peut s'engager derrière le collier (16, 19) au moyen d'une connexion à enclenchement positif.

3. Unité de fixation selon l'une des revendications précédentes, **caractérisée en ce qu'**un élément de plaque, notamment annulaire (18) avec un alésage central est attaché à l'élément isolant (11) et au trou borgne (12) d'une manière entourante, l'alésage ayant de préférence un diamètre d'alésage inférieur au diamètre de l'ouverture (17) du trou borgne (12) pour former une collerette (19).

4. Unité de fixation selon la revendication 3, **caractérisée en ce que** l'élément en plaque (18) présente le même coefficient de dilatation thermique similaire que celui du matériau de l'élément isolant (11).

5. Unité de fixation selon l'une des revendications précédentes, **caractérisée en ce qu'**à l'intérieur du trou borgne (12) est aménagé un manchon (14) destiné à recevoir l'élément de maintien (21, 28, 30, 33, 37), et de préférence le manchon (14) présente une collerette (16, 19) dirigée radialement vers l'intérieur et située au côté faisant face à la paroi de récipient (23).

6. Unité de fixation selon l'une des revendications 2 à 5, **caractérisée en ce que** l'élément de maintien (21, 28, 30, 33, 37) peut être guidé à partir de la collerette (16, 19), en particulier sans frottement vers respectivement le trou borgne (12) et le manchon (14).

7. Unité de fixation selon l'une des revendications précédentes, **caractérisée en ce que** l'élément de maintien (21, 28, 30, 33, 37) est sollicité au moyen d'un ressort (39) ou d'un élastomère dans la direction de la paroi du récipient (23).

8. Unité de fixation selon l'une des revendications précédentes, **caractérisée en ce qu'**un élément de guidage (40) avec une broche de guidage (41) peut être agencé entre le fond du trou borgne (13) du trou borgne (12) et l'élément de maintien (37), de préférence la broche de guidage (41) peut être guidée au moins partiellement à l'intérieur d'un alésage borgne (38) de l'élément de maintien (37) faisant face au fond du trou borgne (13), et le ressort (39) ou l'élastomère peut être agencé notamment à l'intérieur de l'alésage borgne (38).

9. Unité de fixation selon l'une des revendications précédentes, **caractérisée en ce qu'**un élément de maintien (21, 28, 30, 33, 37) sollicité dans la direction de la paroi de récipient (23) peut être maintenu dans un état de montage par un moyen de verrouillage libérable (42) associé à l'ouverture (17) du trou borgne (12), en particulier un film, dans un état rétracté dans l'élément isolant (11).

10. Unité de fixation selon l'une des revendications précédentes, **caractérisée en ce qu'**une isolation est composée de plusieurs éléments isolants juxtaposés (11) et que, de préférence, pour chaque élément isolant (11) exactement une unité de fixation (10, 36) peut être positionnée dans le centre thermique de l'élément isolant (11).

11. Récipient pour substances cryogéniques, en particulier un récipient de stockage ou de transport pour le gaz naturel liquéfié, avec une paroi de récipient (23) et avec des éléments isolants (11) y agencés, **caractérisé en ce que** les éléments isolants (11) avec une unité de fixation (10) selon l'une des revendications 1 à 10 sont agencés à la paroi de récipient (23).
